# EUROPÄISCHE PATENTANMELDUNG

(11) **EP 1 241 731 A2**
(43) Veröffentlichungstag der Anmeldung: **18.09.2002**
(21) Anmeldenummer: 02001755.4
(22) Anmeldetag: 25.01.2002
(51) Int. Cl.: H01Q 1/32

(54) **Antennenanordnung**

(30) Priorität: 16.03.2001 DE 10113285
(71) Anmelder: DaimlerChrysler AG, 70567 Stuttgart (DE)
(72) Erfinder: Reichert, Günter, Dr., 71563 Affalterbach (DE)

(57) **Zusammenfassung**

Für eine Erhaltung der optischen Qualität der Fahrzeugaußenhaut eines Fahrzeugs bei gleichzeitig steigender Anzahl von in der Fahrzeugaußenhaut integrierten Antennen ist erfindungsgemäß eine Antennenanordnung mit einer Anzahl von Antennen (6) für unterschiedliche Funktionen und Frequenzen vorgesehen, wobei die Antennen (6) in/unter strukturbedingten Ausnehmungen (4, 4A, 4B) der Fahrzeugaußenhaut (2) und/oder in/unter auf die Fahrzeugaußenhaut (2) aufgebrachten Verkleidungselementen (10A bis 10H) angeordnet sind.

## Beschreibung

Die Erfindung betrifft eine Antennenanordnung, insbesondere für ein Fahrzeug, mit einer Anzahl von Antennen für unterschiedliche Funktionen und Frequenzen.

Antennen dienen üblicherweise der Kommunikation mit Rundfunkund/oder Mobilfunksystemen, terrestrisch oder satellitengestützt, mit Short Range Communication Systemen (SRC) oder sie sind Teil von fahrzeugeigenen Anlagen. Mit der steigenden Anzahl von Kommunikationssystemen kommt es zu einer stetig steigenden Anzahl von im Fahrzeug zu integrierenden Funkdiensten, die eine Anordnung weiterer Antennen im Fahrzeug erforderlich machen. Beispielhaft sind folgende Funkdienste in das Fahrzeug bereits integriert bzw. noch zu integrieren:

| Funkdienst | Bauraum |
|---|---|
| AM | Heckscheibe |
| FM Diversity | Heckscheibe |
| TV-Diversity | Heckscheibe |
| Zentralverriegelung | Heckscheibe |
| Mobilfunk | Dachrahmen |
| GPS | Dachrahmen |
| Mobilfunk-Notruf | Stoßfänger |
| 2./n. Mobilfunk-Antennen | ? |
| Satelliten-Radio | ? |
| DAB/DMB, ETC, SRC | ? |
| Globalstar/Orbcom | ? |
| Zusatzantenne | ? |

Neben den flächendeckenden Funkdiensten sind weitere fahrzeugeigene Funksysteme bekannt, die ebenfalls eine Vielzahl von Antennen erfordern. Beispielsweise sind dies Antennen für ein Abstandsradarsystem, für ein elektronisches Schließsystem, für eine Reifendruckkontrolle, für ein Telestartsystem, für eine Einparkhilfe. Gegenüber den oben genannten flächendeckenden Funkdiensten weisen fahrzeugeigene Funksysteme keine Verbindung zu einem flächendeckenden Funkdienst oder -netz auf.

Desweiteren dienen insbesondere die genannten Short Range Communication Systeme einer lokal begrenzten Kommunikation, d.h. die damit verbundenen Funkdienste sind nicht flächendeckend. Beispielsweise sind dies elektronische Mautkontrollsysteme (E-lectronic Toll Collection, ETC), Einfahr- und Ausfahr-Kontrollsysteme, Sicherheits- und Warnsysteme oder sogenannte Fahrzeug-zu-Fahrzeug-Kommunikationssysteme, die ebenfalls auf die unmittelbare Fahrzeugumgebung begrenzt sind.

Rundfunk- und TV-Antennen werden bei Limousinen üblicherweise als Scheibenantennen in der Heckscheibe ausgeführt. Beispielsweise ist dies aus DE 44 06 240 A1 bekannt. Mobilfunkantennen sind üblicherweise als kurze Stabantennen am hinteren Ende des Dachs oder auf dem oberen Ende der Heckscheibe angeordnet. Desweiteren ist es aus der US 4,758,166 bzw. DE 195 35 250 A1 bekannt, Antennen in Karosserieteilen des Fahrzeugs, wie Heckdeckel, Dach, zu integrieren und anzuordnen.

Die Umsetzung weiterer Funkdienste macht es erforderlich, weitere Antennen im Fahrzeug zu integrieren. Dabei ist die Unterbringung weiterer Antennen, wenn überhaupt, nur mit hohem Zeitund Entwicklungsaufwand möglich. Dies ist vor allem durch die komplexen, sich teilweise widersprechenden gegenseitigen Einsatzbedingungen für verschiedenartige Antennen auf einem weitgehend begrenzten Raum, wie dem eines Fahrzeugs, begründet. Beispielsweise ist die Anzahl von auf die Fahrzeughaut zusätzlich aufgebrachten Antennen, wie Stab-, Patch- oder Helix-Antennen, sowohl aus optischen als auch strömungstechnischen Gründen begrenzt. Darüber hinaus kann es bei einer derartig hohen Anzahl von auf einem begrenzten Raum angeordneten Antennen zu gegenseitigen, unerwünschten Beeinflussungen kommen, welche zu unterdrücken bzw. zu vermeiden sind.

Aufgabe der Erfindung ist es daher, eine Antennenanordnung mit einer Anzahl von Antennen für unterschiedliche Funktionen und Frequenzen für ein Fahrzeug mit einer Fahrzeugaußenhaut anzugeben, bei welcher bei gleichzeitig steigender Anzahl von in der Fahrzeugaußenhaut integrierten Antennen die optische Qualität der Fahrzeugaußenhaut erhalten bleibt.

Diese Aufgabe wird erfindungsgemäß gelöst durch eine Antennenanordnung mit einer Anzahl von Antennen für unterschiedliche Funktionen und Frequenzen für ein Fahrzeug mit einer Fahrzeugaußenhaut, wobei die Antennen in strukturbedingten Ausnehmungen der Fahrzeugaußenhaut und/oder in auf die Fahrzeugaußenhaut aufgebrachten Verkleidungselementen angeordnet sind. Durch eine derartige Antennenanordnung sind bei weitgehend unveränderter optischer Qualität der Fahrzeugaußenhaut durch Verwendung bereits vorhandener Anbauelemente oder Ausnehmungen zur Aufnahme der Antennen möglichst gute aerodynamische Eigenschaften des Fahrzeugs gegeben. Durch die Auslegung der Antennen ist eine gute Richtcharakteristik sowie eine möglichst gute gegenseitige Entkopplung der Antennen gewährleistet. Insbesondere sind die Antennen nach außen nicht sichtbar angeordnet. Je nach Art und Ausführung der Fahrzeugaußenhaut, insbesondere bei aus Kunststoff, Glas oder Keramik ausgeführten Ausnehmungen bzw. Verkleidungs- oder Karosserieelementen, dient der Kunststoff, das Glas oder die Keramik als Trägermaterial oder als Dielektrikum für die jeweilige aufzunehmende Antenne. Je nach Art und Größe des Elements bzw. nach zur Verfügung stehendem Bauraum bei der Ausnehmung kann die Antenne als eine Leiterstruktur oder als Modul ausgebildet sein.

Zweckmäßigerweise ist mindestens eine der Antennen in einer als Ausnehmung ausgebildeten Lüftungsöffnung angeordnet. Darüber hinaus werden bevorzugt bereits strukturbedingte Aussparungen der Fahrzeugaußenhaut der Karosserie verwendet, welche mit Materialien abgedeckt oder gefüllt sind, die für elektromagnetische Wellen ausreichend durchlässig sind. Beispielsweise sind in der Motorhaube eines Fahrzeugs Lüftungsöffnungen vorgesehen, welche eine hinreichend große Öffnung zur Aufnahme von Antennen aufweisen. In bevorzugter Ausführungsform sind Abdeckelemente, z.B. Gitter, aus Kunststoff, Gummi oder Glas vorgesehen. Diese sind an ihrem Rand gegen die Fahrzeugaußenhaut abgedichtet. Alternativ oder zusätzlich kann die Aussparung oder Ausnehmung mit einem Füllmaterial, z.B. Harz, vergossen sein, wobei die Antenne in dem betreffenden Material eingebracht ist. Dabei ist das Füllmaterial in der Art eines Inlays in die Fahrzeugaußenhaut eingebracht. Bei dieser Ausführungsform kann die Antenne in besonders einfacher Weise vor Verschmutzung oder Beschädigung geschützt werden. Je nach Art und Ausführung kann die Antenne als vorgefertigtes Antennenmodul oder als Leiterstruktur in der Ausnehmung selbst, in dem Füllmaterial und/oder in dem Abdeckelement angeordnet sein. Dabei dient das Abdeckelement oder das Füllmaterial als Träger der Leiterstruktur oder als Dielektrikum der Antennen. Mit anderen Worten: In bevorzugter Ausführungsform sind die Antennen in einer Aussparung, insbesondere in einer an der Fahrzeugaußenhaut strukturbedingt auftretenden Öffnung, oder in/unter einer für elektromagnetische Wellen durchlässigen Abdeckung der Aussparung bzw. der Fahrzeug- oder Karosserieaußenhaut integriert.

Vorteilhafterweise ist mindestens eine der Antennen in einer stoßstellenbedingten Ausnehmung oder Struktur, insbesondere im Bereich von Stoßstellen der Fahrzeugaußenhaut, angeordnet. Beispielsweise sind die Antennen in Stoßstellen oder Nahtstellen, an denen einzelne Komponenten der Fahrzeugaußenhaut ineinander übergehen, angeordnet. Hierzu wird die Stoßstelle entsprechend breit ausgeführt, so daß ein genügend großer Baurum für Antennen gegeben ist. Nach außen kann eine für elektromagnetische Wellen durchlässige Abdeckung zum Verschluß der Antennen eingesetzt werden. Hierdurch ist aufgrund der ohnehin sichtbaren Übergänge der Komponenten der Fahrzeugaußenhaut eine Verschlechterung der optischen Qualität der Fahrzeugaußenhaut sicher vermieden. Bevorzugte Übergänge bei einem Fahrzeug sind die Übergänge an der Heckklappe, der Motorhaube, den Türen, der Frontoder Heckscheibe, am Schiebedach sowie der Übergang zwischen Dach und Seitenwand, an welchem häufig eine Dachrinne eingearbeitet ist.

Eine weitere bevorzugte Ausführungsform ist gegeben, bei der die Ausnehmung durch einen Schlitz in der Fahrzeugaußenhaut gebildet ist. Dabei ist der Schlitz derart dimensioniert, daß eine Schlitzantenne gebildet ist. Mit anderen Worten: Durch einen direkt in die metallische Fahrzeugaußenhaut geeignet dimensionierten Schlitz oder Öffnung, kann eine Schlitz- oder Aperturantenne gebildet werden. Die daraus resultierende Öffnung ist mittels einer für elektromagnetische Wellen durchlässige Abdeckung verschließbar. Bevorzugt sind bereits sichtbare Trennstellen zu verwenden, beispielsweise an einem Spalt oder einer Nahtstelle zwischen dem Fahrzeugdach und der Seitenwand.

Zweckmäßigerweise ist das Verkleidungselement als ein flächig auf die Fahrzeugaußenhaut aufgebrachtes Element ausgebildet. Bevorzugt ist das Verkleidungselement ein Zierelement, eine Zier- oder Rammleiste. Ein Zierelement kann beispielsweise ein auf die Fahrzeugaußenhaut aufgebrachtes Markenzeichen sein, wobei die Antenne im oder unter dem Markenzeichen angeordnet ist. Alternativ kann das Element stehend auf die Fahrzeugaußenhaut angebracht sein. Je nach Art und Ausführung des Zierelements ist die Antenne vorzugsweise durch das Zierelement selbst gebildet. Beispielsweise kann das Zierelement als ein Ringdipol für den Rundfunkempfang ausgeführt sein. Dabei ist das Zierelement z.B. flächig auf dem Kühlergrill oder der Heckklappe oder stehend auf der Motorhaube angeordnet.

Als Zier- oder Rammleiste dienen beispielsweise die auf dem Fahrzeugdach angeordneten Kunststoffleisten, welche das Fahrzeugdach vor einer Beschädigung durch Gepäckstücke schützen, beispielsweise einem bei Kombi mit Gepäckträgern. Desweiteren ist eine aus Kunststoff gebildete Dachrailing für eine Integration von Antennen verwendbar. Je nach Art und Ausführung ist das Verkleidungs- oder Anbauelement aus nichtleitendem Material, insbesondere aus Kunststoff, Gummi oder Glas, gebildet. Dabei dient das Anbau- oder Verkleidungselement je nach Form und Ausführung als durchlässige Abdeckung, als Träger, als Dielektrikum oder als sonstiger Bestandteil der Antenne.

Alternativ oder zusätzlich kann ein Leuchtelement, welches im Außenbereich des Fahrzeugs angeordnet ist, zur Aufnahme der Antenne durch eine geeignete geometrische Dimensionierung ausgebildet sein. Beispielsweise dient eine zwischen zwei seitlich angeordneten Bremsleuchten zusätzliche hochgesetzte dritte Bremsleuchte zur Aufnahme einer Schlitzantenne. Dazu weist die Bremsleuchte eine Öffnung oder einen Schlitz auf, der durch seine geometrischen Abmessung als Schlitzantenne dient. Alternativ oder zusätzlich können seitliche Fahrtrichtungsanzeiger als Schlitzantenne verwendet werden. Darüber hinaus können weitere Leuchten, wie beispielsweise Scheinwerfer, vordere und/oder hintere, welche Reflektoren aus nicht metallischen Material umfassen, zur Aufnahme einer Antenne, z.B. einer Reflektorantenne, dienen.

Ausführungsbeispiele der Erfindung werden anhand einer Zeichnung näher erläutert. Darin zeigen:
- FIG 1: schematisch eine Antennenanordnung für ein Fahrzeug mit in strukturbedingten Ausnehmungen der Fahrzeugaußenhaut angeordneten Antennen,
- FIG 2: schematisch eine Antennenanordnung in auf die Fahrzeugaußenhaut aufgebrachten Verkleidungselementen,
- FIG 3: schematisch eine Antennenanordnung in einer stoßstellenbedingten Ausnehmung eines Fahrzeugs, und
- FIG 4: schematisch eine Antennenanordnung in einer Stoßstelle.

Einander entsprechende Teile sind in allen Figuren mit den gleichen Bezugszeichen versehen.

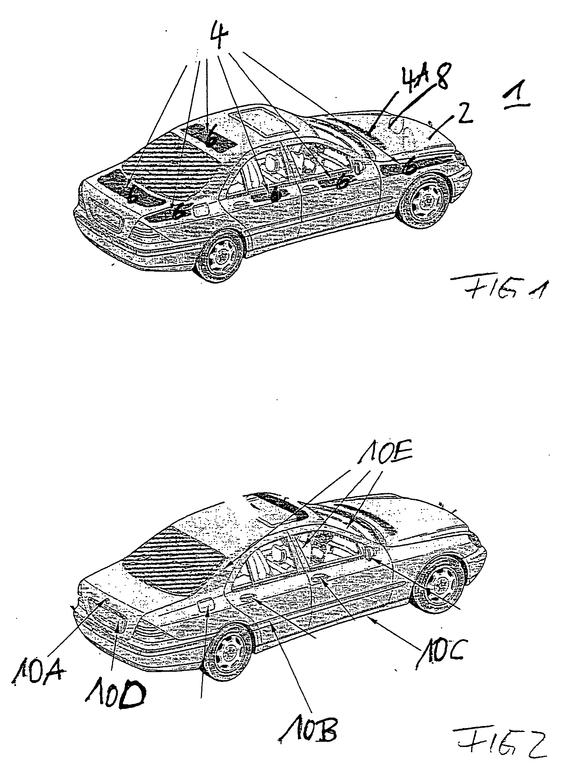

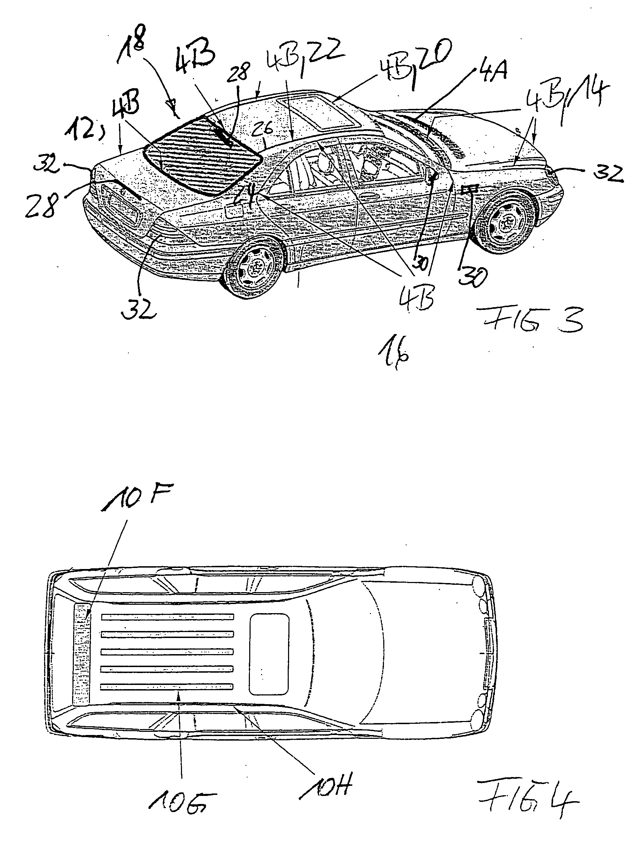

Die Figur 1 zeigt ein Fahrzeug 1 mit einer Fahrzeugaußenhaut 2, welche strukturbedingte Ausnehmungen 4 aufweist, in denen mehrere Antennen 6 einer Antennenanordnung angeordnet sind. Dabei bieten die Ausnehmungen 4 oder Aussparungen in der Metall- oder Fahrzeugaußenhaut 2 der Karosserie eine besonders einfache und nach außen nicht oder wenig sichtbare Integration von einer Anzahl von Antennen 6 für unterschiedliche Funktionen und Frequenzen. Für eine möglichst gute optische Qualität der Fahrzeugaußenhaut 2 sind die Ausnehmungen 4 mit Abdeckungen, welche für elektromagnetische Wellen durchlässig sind, versehen. Beispielsweise sind die Abdeckungen als Abdeckplatten aus Kunststoff, Glas, Keramik oder Gummi gebildet, welche am Rand gegen die Fahrzeugaußenhaut 2 abgedichtet sind. Alternativ oder zusätzlich kann die Ausnehmung 4 mit Füllmaterial ausgefüllt sein, welches für elektromagnetische Wellen durchlässig ist. Dabei kann die Antenne 6 als Antennenmodul oder Leiterstruktur in das Füllmaterial eingebracht sein, wobei dieses dann als Inlay in der Ausnehmung 4 angeordnet ist. Alternativ oder zusätzlich kann die Antenne 6 unter oder in der Abdeckung angebracht sein. Die Abdeckung oder das Füllmaterial können dabei als Träger der Leiterstruktur oder als Dielektrikum der Antenne 6 dienen.

Als Ausnehmungen 4 der Fahrzeugaußenhaut dienen bevorzugt Lüftungsöffnungen 4A in der Motorhaube 8. Dabei sind die Lüftungsöffnungen mit der für elektromagnetische Wellen durchlässigen Abdeckung, insbesondere mit einem Gitter, versehen. Je nach Art und Ausführung kann die Antenne 6 als Inlay in der Lüftungsöffnung 4A, oder in der Abdeckung oder unter der Abdeckung integriert sein.

Figur 2 zeigt eine weitere Möglichkeit zur nicht sichtbaren Integration der Antennen 6. Dabei sind die Antennen 6 in oder unter Anbauteilen, insbesondere Verkleidungselementen 10A bis 10E, angeordnet. Bevorzugt sind die Antennen 6 in oder unter Verkleidungselementen 10, welche flächig auf die Fahrzeugaußenhaut 2 aufgebracht sind, angeordnet. Als flächige Verkleidungselemente 10A bis 10E dienen beispielsweise ein Zierelement 10A, z.B. ein Markenzeichen, oder eine Rammleiste 10B, eine Schwellenverkleidung 10C, eine Kennzeichenmulde 10D oder eine Türverkleidung 10E. Darüber hinaus kann ein weiteres Zierelement 10A stehend auf die Fahrzeugaußenhaut 2, beispielsweise als Markenzeichen auf die Motorhaube 8, angeordnet sein. Dabei ist die Antenne, z.B. ein Ringdipol, durch das Zierelement 10A selbst gebildet. Je nach Ausführung des Zierelements 10A kann dieses auch bei der flächigen Ausführung, z.B. Markenzeichen auf dem Heckdeckel oder im Kühlergrill, die Antenne bilden.

Bevorzugt sind die Anbau- oder Verkleidungselemente 10A bis 10E zumindest teilweise aus nichtleitendem Material, z.B. aus Kunststoff, Gummi oder Glas. Die Antennen 6 sind dabei in oder unter dem jeweiligen Verkleidungselemente 10A bis 10E nach außen nicht sichtbar angebracht. Je nach Form und Ausführung des betreffenden Verkleidungselements 10A bis 10E ist die jeweilige Antenne 6 als Antennenmodul, Leiterstruktur oder Schlitzantenne ausgebildet. Das nichtleitende Material dient dabei als für elektromagnetische Wellen durchlässige Abdeckung, als Träger oder Dielektrikum der Antenne 6.

Desweiteren ist in der Figur 3 die Antenne 6 in mindestens einer stoßstellenbedingten Ausnehmung 4B angeordnet. Hierzu wird die stoßstellenbedingte Ausnehmung 4B oder Stoßstelle entsprechend breit ausgeführt, so daß ein genügend großer Baurum für die Antennen 6 gegeben ist. Nach außen kann eine für elektromagnetische Wellen durchlässige Abdeckung zum Verschluß der Antennen 6 verwendet werden. Die stoßstellenbedingten Ausnehmungen 4B sind insbesondere Bauräume an Stoßstellen oder Nähten, an denen einzelne Komponenten der Fahrzeugaußenhaut 2 ineinander übergehen. Als Übergänge oder Stoßstellen bei dem Fahrzeug 1 dienen insbesondere die Spalte an der Heckklappe 12, der Motorhaube 14 und den Türen 16 sowie die Übergänge der Front- oder Heckscheibe 18, am Schiebedach 20 und der Übergang zwischen Dach 22 und Seitenwand 24, an welchem häufig eine Dachrinne 26, eingearbeitet ist. Alternativ oder zusätzlich kann an einer Trennstelle, z.B. in einem Spalt oder an der Nahtstelle 26 zwischen dem Dach 22 und der Seitenwand 24, ein in die Fahrzeugaußenhaut 2 eingebrachter Schlitz oder eine eingebrachte Öffnung als sogenannte Schlitzantenne dienen. Dieser kann dann ggf. durch eine Abdeckung geschützt werden.

Desweiteren können auch die in der metallischen Außenhaut ohnehin vorhandenen Öffnungen, wie z.B. eine Schlitzöffnung in einer Bremsleuchte, insbesondere die zusätzliche, dritte Bremsleuchte 28, oder die Lüftungsöffnung 4A in der Motorhaube 8 als Schlitzantennen dienen. Dazu werden diese als Antennen dienenden Öffnungen für einen betreffenden auszuführenden Funkdienst entsprechend geometrisch dimensioniert, angeordnet und gespeist. Das Glas der dritten Bremsleuchte 28 oder das Kunststoffgitter der Lüftungsöffnung 4A verdecken die betreffende Schlitzantenne ohne merklichen Einfluß auf das Design des Fahrzeugs 1. Alternativ oder zusätzlich können in weiteren Leuchtelementen 30, welche im Außenbereich des Fahrzeugs 1 angeordnet sind, Antennen integriert werden. Beispielsweise können seitliche Fahrtrichtungsanzeiger oder im Außenspiegel angeordnete Fahrtrichtungsanzeiger eine Schlitzöffnung aufweisen, welche als Schlitzantenne dient. Darüber hinaus können weitere Leuchten, wie beispielsweise Scheinwerfer 32, vordere und/oder hintere, welche Reflektoren aus nicht metallischen Material umfassen, zur Aufnahme der Antenne dienen.

In Figur 4 dient desweiteren als Verkleidungselement 10 ein Spoiler 10F, Trägerleisten 10G eines Gepäckträgers oder eine Dachrailing 10H. Je nach Art und Ausführung sind diese Verkleidungselemente 10F bis 10H aus Kunststoff gebildet, wobei in oder unter diesen die Antenne 6 angebracht ist. Dabei kann die betreffende Antenne 6 als Antennenmodul, als Schlitzantenne oder als Leiterstruktur ausgebildet sein.

Die mit der Erfindung erzielten Vorteile bestehen insbesondere darin, daß die in einer Aussparung 4, insbesondere in einer an der Fahrzeugaußenhaut 2 strukturbedingt auftretenden Öffnung 4, oder in/unter einer für elektromagnetische Wellen durchlässigen Abdeckung der Aussparung 4 bzw. der Fahrzeug- oder Karosserieaußenhaut 2 bzw. in oder unter Verkleidungselementen 10 angebrachten Antennen 6 für unterschiedliche Funktionen und Frequenzen nach außen nicht oder wenig sichtbar sind. Hierdurch ist eine Verschlechterung der optischen Qualität der Fahrzeugaußenhaut vermieden. Darüber hinaus sind die Einbauorte anhand von technologischen, optischen und funktionellen Voraussetzungen für den Einsatz einer Vielzahl von Antennen mit unterschiedlichen Funktionen und Frequenzen derart ausgeführt, daß die Antennen möglichst gut entkoppelt sind.

## Patentansprüche

1. Antennenanordnung mit einer Anzahl von Antennen (6) für unterschiedliche Funktionen und Frequenzen für ein Fahrzeug (1) mit einer Fahrzeugaußenhaut (2),
**dadurch gekennzeichnet,**
**daß** die Antennen (6) in strukturbedingten Ausnehmungen (4, 4A, 4B) der Fahrzeugaußenhaut (2) und/oder in auf die Fahrzeugaußenhaut (2) aufgebrachten Verkleidungselementen (10A, 10B, 10C, 10D, 10E, 10F, 10G, 10H) angeordnet sind.

2. Antennenanordnung nach Anspruch 1,
**dadurch gekennzeichnet,**
**daß** mindestens eine der Antennen (6) in einer als Ausnehmung (4) ausgebildeten Lüftungsöffnung (4A) angeordnet ist.

3. Antennenanordnung nach Anspruch 1 oder 2,
**dadurch gekennzeichnet,**
**daß** mindestens eine der Antennen (6) in einer stoßstellenbedingten Ausnehmung (4B), insbesondere im Bereich von Stoßstellen der Fahrzeugaußenhaut (2), angeordnet ist.

4. Antennenanordnung nach einem der vorhergehenden Ansprüche,
**dadurch gekennzeichnet,**
**daß** die Ausnehmung (4) durch einen Schlitz in der Fahrzeugaußenhaut (2) gebildet ist, wobei der Schlitz derart dimensioniert ist, daß eine Schlitzantenne gebildet ist.

5. Antennenanordnung nach einem der vorhergehenden Ansprüche,
**dadurch gekennzeichnet,**
**daß** das Verkleidungselement (10A bis 10H) als ein flächig auf die Fahrzeugaußenhaut (2) aufgebrachtes Element ausgebildet ist.

6. Antennenanordnung nach einem der Ansprüche 1 bis 4,
**dadurch gekennzeichnet,**
**daß** das Verkleidungselement (10A) ein stehendes Element auf die Fahrzeugaußenhaut (2) aufgebracht ist.

7. Antennenanordnung nach einem der vorhergehenden Ansprüche,
**dadurch gekennzeichnet,**
**daß** die Antenne durch das Verkleidungselement (10A) selbst gebildet ist.

8. Antennenanordnung nach einem der vorhergehenden Ansprüche,
**dadurch gekennzeichnet,**
**daß** das Verkleidungselement (10A bis 10H) ein Zierelement oder eine Rammleiste ist.
